# EUROPEAN PATENT SPECIFICATION

(11) **EP 3 282 773 B1**
(45) Date of publication and mention of the grant of the patent: **25.09.2019**
(21) Application number: 15890258.5
(22) Date of filing: 29.04.2015
(51) Int. Cl.: H04W 52/02

(54) **TERMINAL CONTROL METHOD AND APPARATUS, AND TERMINAL DEVICE**
ENDGERÄTESTEUERUNGSVERFAHREN UND -VORRICHTUNG SOWIE ENDGERÄTEVORRICHTUNG
PROCÉDÉ ET APPAREIL DE COMMANDE DE TERMINAL ET TERMINAL

(43) Date of publication of application: 14.02.2018
(73) Proprietor: Huawei Technologies Co., Ltd., Longgang District Shenzhen, Guangdong 518129 (CN)
(72) Inventor: GUO, Yuhua, Shenzhen Guangdong 518129 (CN); NI, Yuanqiang, Shenzhen Guangdong 518129 (CN); NIU, Shaoyong, Shenzhen Guangdong 518129 (CN)
(74) Representative: Gill Jennings & Every LLP
(86) International application number: PCT/CN2015/077803
(87) International publication number: WO 2016/172878

(56) References cited:
- CN-A- 1 323 495
- CN-A- 1 988 698
- CN-A- 101 998 597
- US-A1- 2009 305 732
- US-A1- 2011 194 474

## Description

### TECHNICAL FIELD

Embodiments of the present invention relate to the field of electronic products, and in particular, to a terminal control method and apparatus, and a terminal device.

### BACKGROUND

With rapid development of electronic technologies, terminals such as a smartphone and a personal digital assistant (Personal Digital Assistant, PDA for short) are widely applied by virtue of their powerful functions.

An operating system and multiple types of application software are preinstalled in a terminal. In addition, plenty of application software may be downloaded to the terminal according to a user's instruction. After the application software is installed, the terminal may have more powerful functions, and an operation is more convenient.

The terminal includes the operating system and various types of application software. Therefore, when any application software has a broadcast message (such as a software update message) or the operating system has a broadcast message (such as an operating system upgrade message), the terminal needs to start the operating system and perform a corresponding operation according to the broadcast message.

When plenty of application software is installed in the terminal or the operating system is frequently upgraded, the terminal frequently receives a broadcast message. The terminal needs to start the operating system each time when receiving a broadcast message. This causes a problem that the terminal frequently starts the operating system and energy consumption of the terminal is high.

US 2011/0194474 relates to apparatus and method for reducing power consumption using packet filtering in portable terminal.

### SUMMARY

Embodiments of the present invention provide a terminal control method and apparatus, and a terminal device, so as to resolve a current problem of high energy consumption that exists in a terminal and is caused by frequent starting of an operating system.

Various aspects of the present disclosure have been defined in the independent claims. Further technical features of each of these aspects have been defined in the respective dependent claims.

In the embodiments of the present invention, a terminal detects a message received from the outside; and when determining that the message is a broadcast message, determines whether to start an operating system according to whether the broadcast message is a wanted broadcast message. By using the technical solutions of the present invention, the terminal determines whether the received broadcast message is a wanted broadcast message; and when the broadcast message is an unwanted broadcast message and the operating system of the terminal is in a standby state, prohibits starting of the operating system. Therefore, a process of frequently starting the operating system is avoided when there are plenty of broadcast messages. In addition, the operating system being not frequently awakened can effectively reduce energy consumption of the terminal.

### BRIEF DESCRIPTION OF DRAWINGS

FIG. 1 is a flowchart of controlling a terminal according to an embodiment of the present invention;
FIG. 2A and FIG. 2B are a first flowchart of controlling a terminal in a specific application scenario according to an embodiment of the present invention;
FIG. 3A and FIG. 3B are a second flowchart of controlling a terminal in a specific application scenario according to an embodiment of the present invention;
FIG. 4 is a schematic structural diagram of a terminal control apparatus according to an embodiment of the present invention; and
FIG. 5 is a schematic structural diagram of a terminal device according to an embodiment of the present invention.

### DESCRIPTION OF EMBODIMENTS

The following further describes the embodiments of the present invention in detail with reference to the accompanying drawings of this specification.

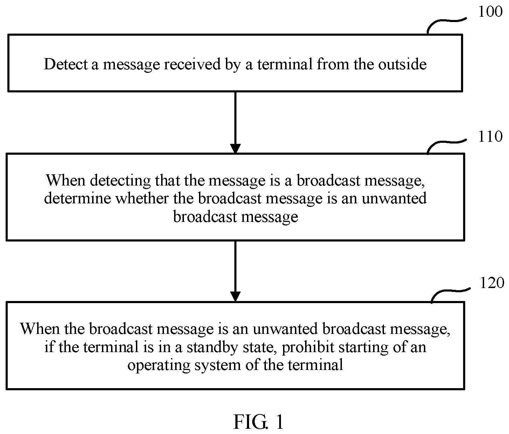

Referring to FIG. 1, in an embodiment of the present invention, a method in which a terminal controls starting of an operating system includes the following steps.

Step 100: Detect a message received by a terminal from the outside.

In this embodiment of the present invention, the terminal may receive multiple types of messages from the outside, such as a short message service message sent by another terminal, a short message service message sent by an operator, a message sent by a base station or the like, a message sent by an application software service provider, and a message sent by an operating system service provider. In this embodiment of the present invention, the message sent by the application software service provider and the message sent by the operating system service provider may be used as broadcast messages.

The terminal receives the multiple types of messages. Therefore, when receiving a message, the terminal should detect the received message and determine, according to a detection result, whether to start an operating system.

Step 110: When detecting that the message is a broadcast message, determine whether the broadcast message is an unwanted broadcast message.

In this embodiment of the present invention, the terminal locally pre-establishes an application program for controlling the operating system; determines whether the received message is a broadcast message by using the application program for controlling the operating system; and when determining that the received message is a broadcast message, determines whether the broadcast message is an unwanted broadcast message and whether to control the operating system to start.

Optionally, a method in which the terminal determines whether the received message is a broadcast message by using the application program for controlling the operating system includes: The message received by the terminal includes a field describing a user identifier, and the terminal obtains, by using the field that describes the user identifier and is included in the message, the user identifier included in the message; because the user identifier corresponds to application software or the operating system installed in the terminal, the terminal can determine a recipient of the message according to the obtained user identifier, where the recipient is any application software or the operating system installed in the terminal; the terminal saves an identifier of the recipient into a local recipient identifier list, and only when a recipient identifier corresponding to the message received by the terminal is in the recipient identifier list, the terminal sends the received message to the recipient corresponding to the message; when it is determined that the user identifier corresponds to any application software installed in the terminal or the user identifier corresponds to the operating system of the terminal, it is determined that the message is a broadcast message. For example, when the terminal determines that the user identifier included in the message corresponds to WeChat application software, the terminal searches a locally installed application program for the WeChat application software; and when the WeChat application software is locally installed in the terminal, it is determined that the message is a broadcast message. Alternatively, the message received by the terminal includes a field describing a message type, and the terminal obtains the message type included in the message, and determines that the message is a broadcast message when the message type is a broadcast message type.

Further, because the operating system corresponds to a specific broadcast message in a fixed quantity, when the message is the specific broadcast message, it may be determined that the message is a broadcast message corresponding to the operating system.

By using the technical solution, by using the application program for controlling the operating system and according to a corresponding field included the message received by the terminal, the terminal determines whether the received message is a broadcast message. A determining process is convenient and efficient, and a determining result has high accuracy.

Step 120: When the broadcast message is an unwanted broadcast message, if the terminal is in a standby state, prohibit starting of an operating system of the terminal.

In this embodiment of the present invention, the terminal determines whether the message is an unwanted broadcast message by using the application program for controlling the operating system; and if the message is an unwanted broadcast message, prohibits starting of the operating system; or if the message is not an unwanted broadcast message, starts the operating system.

Optionally, a method in which the terminal determines whether the broadcast message is an unwanted broadcast message by using the application program for controlling the operating system includes: searching a preset user identifier list for prohibiting starting of an operating system for the user identifier included in the broadcast message, where the user identifier list for prohibiting starting of an operating system includes one or more user identifiers for prohibiting starting, and the user identifiers for prohibiting starting are preset user identifiers for which an operating system is not allowed to be started, or the user identifiers for prohibiting starting are user identifiers corresponding to forcibly removed application software or operating system, or the user identifiers for prohibiting starting are user identifiers corresponding to application software that automatically exits because of an exception, or the application identifiers for prohibiting starting are user identifiers corresponding to application software that is newly installed in the terminal and whose setting about whether to allow an operating system to start is not confirmed; and when the user identifier included in the broadcast message is included in the preset user identifier list for prohibiting starting of an operating system, determining that the broadcast message is an unwanted broadcast message.

Optionally, when it is determined that the broadcast message is an unwanted broadcast message, a method for prohibiting starting of the operating system specifically includes: locally obtaining, from the terminal, a process corresponding to the user identifier included in the broadcast message; performing a reverse search according to the obtained process, so as to obtain application software or an operating system corresponding to the process; obtaining status information corresponding to the application software or the operating system from a locally saved status list, where the status list includes status information corresponding to each application software or the operating system; and when the status information corresponding to the application software or the operating system is the standby state, removing the recipient identifier included in the recipient identifier list, so that the broadcast message is not sent to the application software or the operating system corresponding to the user identifier, and starting of the operating system and the application software is prevented. Optionally, the foregoing recipient identifier list includes the user identifier corresponding to the message received by the terminal from the outside, and the terminal determines, by using the user identifier, that the broadcast message is a message corresponding to application software or the broadcast message is a message corresponding to the operating system.

Further, when the status information corresponding to the application software or the operating system is a started state, no processing is performed on the started application software or operating system.

Further, when the terminal determines that the broadcast message is a wanted broadcast message by using the application program for controlling the operating system, the operating system is started if the user identifier included in the broadcast message corresponds to the operating system and the operating system is in the standby state; or if the user identifier included in the broadcast message corresponds to any application software and the operating system is in the standby state, the operating system is started and the any application software is started, where the any application software is application software installed in the terminal.

Further, if the terminal is in a started state, when the message is a wanted broadcast message and the user identifier included in the message corresponds to any locally installed application software, the any application software is started; or when the message is an unwanted broadcast message and the user identifier included in the broadcast message corresponds to any application software installed in the terminal, starting of the any application software is prohibited.

By using the technical solution in this embodiment of the present invention, a terminal removes, by using an application program of an operating system, a recipient identifier or a user identifier included in a recipient identifier list, so that an unwanted broadcast message cannot be sent to a corresponding recipient, and purposes of intercepting the unwanted broadcast message and prohibiting starting of the operating system are achieved. Therefore, a quantity of times in which the operating system is awakened in a standby process of the terminal is reduced. This can effectively reduce power consumption and increase standby time of the terminal.

### Application Scenario 1

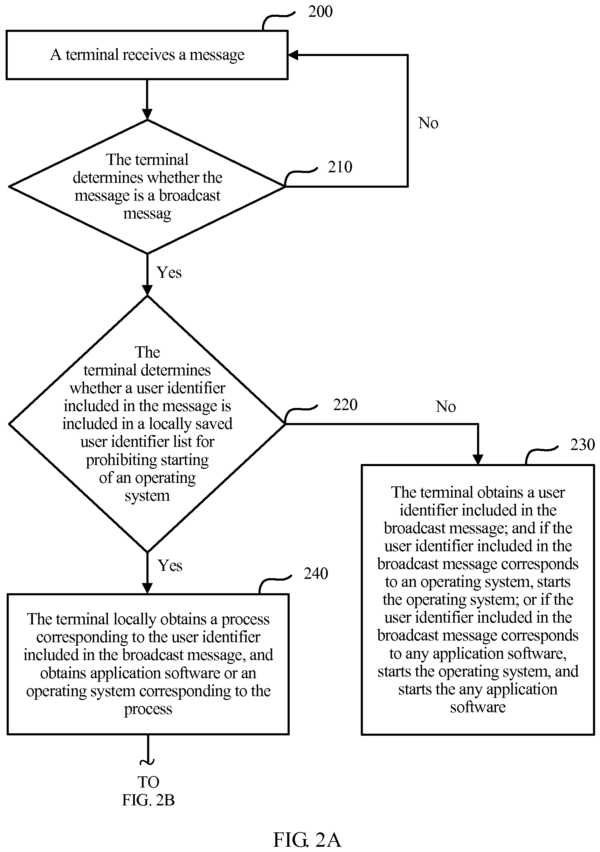

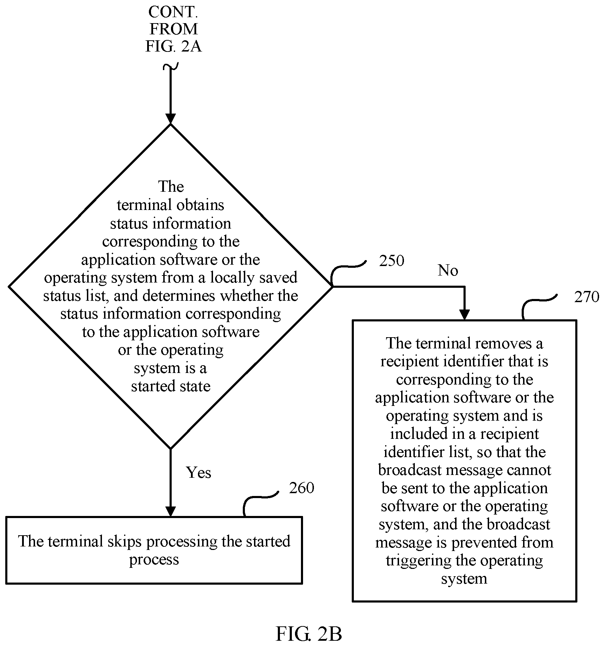

Based on the technical solution, referring to FIG. 2A and FIG. 2B, the following describes in detail a method in which a terminal prohibits starting of an operating system, by using an example in which the terminal is in a standby state and with reference to a specific application scenario.

Step 200: The terminal receives a message.

Step 210: The terminal determines whether the message is a broadcast message; and if the message is a broadcast message, perform step 220; or if the message is not a broadcast message, return to step 200.

Step 220: The terminal determines whether a user identifier included in the message is included in a locally saved user identifier list for prohibiting starting of an operating system; and if the user identifier included in the message is included in the locally saved user identifier list for prohibiting starting of an operating system, perform step 240; or if the user identifier included in the message is not included in the locally saved user identifier list for prohibiting starting of an operating system, perform step 230.

In this embodiment of the present invention, the user identifier list for prohibiting starting of an operating system includes one or more user identifiers for prohibiting starting, and the user identifiers for prohibiting starting are preset user identifiers for which an operating system is not allowed to be started, or the user identifiers for prohibiting starting are user identifiers corresponding to forcibly removed application software or operating system, or the user identifiers for prohibiting starting are user identifiers corresponding to application software that automatically exits because of an exception, or the application identifiers for prohibiting starting are user identifiers corresponding to application software that is newly installed in the terminal and whose setting about whether to allow an operating system to start is not confirmed; and when the user identifier included in the broadcast message is included in the preset user identifier list for prohibiting starting of an operating system, it is determined that the broadcast message is an unwanted broadcast message.

Step 230: The terminal obtains a user identifier included in the broadcast message; and if the user identifier included in the broadcast message corresponds to the operating system, starts the operating system; or if the user identifier included in the broadcast message corresponds to any application software, starts the operating system, and starts the any application software.

Step 240: The terminal locally obtains a process corresponding to the user identifier included in the broadcast message, and obtains application software or an operating system corresponding to the process; and then perform step 250.

Step 250: The terminal obtains status information corresponding to the application software or the operating system from a locally saved status list, and determines whether the status information corresponding to the application software or the operating system is a started state; and if the status information corresponding to the application software or the operating system is the started state, perform step 260; or if the status information corresponding to the application software or the operating system is not the started state, perform step 270.

Step 260: The terminal skips processing the started process.

Step 270: The terminal removes a recipient identifier that is corresponding to the application software or the operating system and is included in the recipient identifier list, so that the broadcast message cannot be sent to the application software or the operating system, and the broadcast message is prevented from triggering the operating system.

By using the foregoing technical solution, a terminal determines whether a received broadcast message is a wanted broadcast message; and when the broadcast message is an unwanted broadcast message and an operating system of the terminal is in a standby state, prohibits starting of the operating system. Therefore, a process of frequently starting the operating system is avoided when there are plenty of broadcast messages. In addition, the operating system being not frequently awakened can effectively reduce energy consumption of the terminal.

### Application Scenario 2

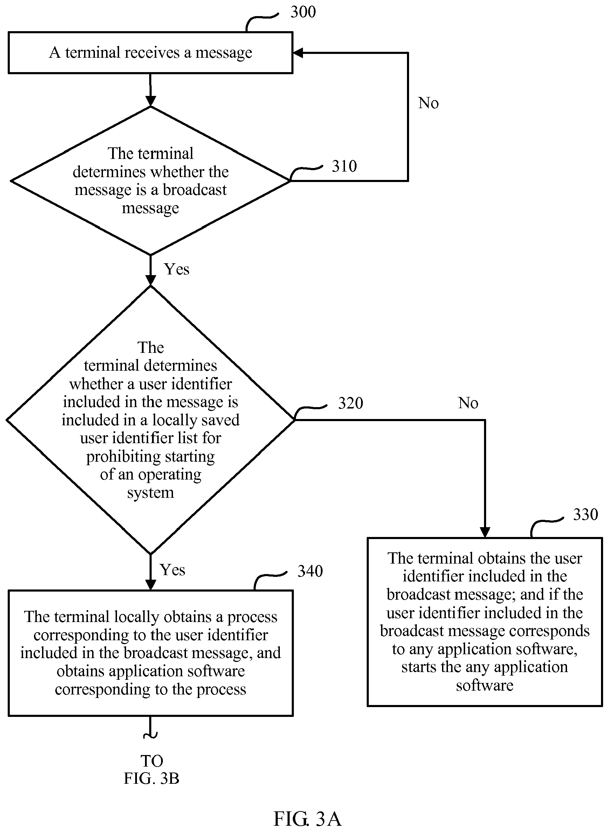

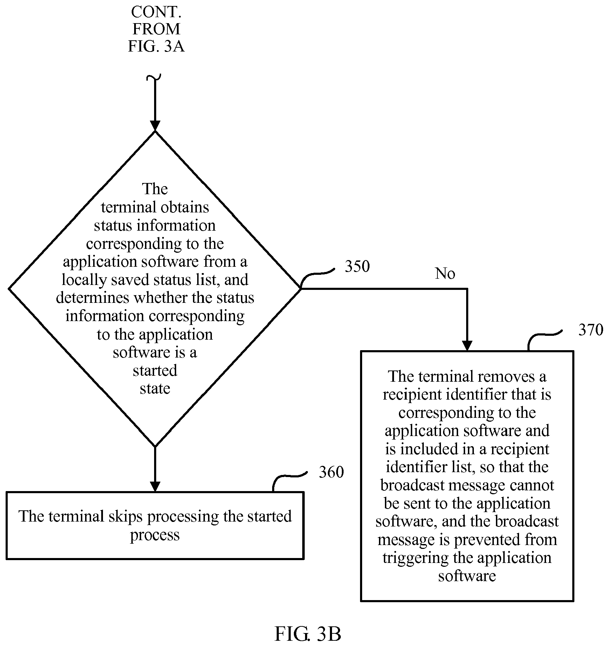

Based on the technical solution, referring to FIG. 3A and FIG. 3B, the following describes in detail a method in which a terminal awakens application software, by using an example in which the terminal is in a started state and with reference to a specific application scenario.

Step 300: The terminal receives a message.

Step 310: The terminal determines whether the message is a broadcast message; and if the message is a broadcast message, perform step 320; or if the message is not a broadcast message, return to step 300.

Step 320: The terminal determines whether a user identifier included in the message is included in a locally saved user identifier list for prohibiting starting of an operating system; and if the user identifier included in the message is included in the locally saved user identifier list for prohibiting starting of an operating system, perform step 340; or if the user identifier included in the message is not included in the locally saved user identifier list for prohibiting starting of an operating system, perform step 330.

Step 330: The terminal obtains the user identifier included in the broadcast message; and if the user identifier included in the broadcast message corresponds to any application software, starts the any application software.

Step 340: The terminal locally obtains a process corresponding to the user identifier included in the broadcast message, and obtains application software corresponding to the process; and then perform step 350.

Step 350: The terminal obtains status information corresponding to the application software from a locally saved status list, and determines whether the status information corresponding to the application software is a started state; and if the status information corresponding to the application software is the started state, perform step 360; or if the status information corresponding to the application software is not the started state, perform step 370.

Step 360: The terminal skips processing the started process.

Step 370: The terminal removes a recipient identifier that is corresponding to the application software and is included in the recipient identifier list, so that the broadcast message cannot be sent to the application software, and the broadcast message is prevented from triggering the application software.

By using the foregoing technical solution, a terminal determines whether a received broadcast message is a wanted broadcast message; and when the broadcast message is an unwanted broadcast message, and an operating system of the terminal is in a started state, prohibits awakening of application software corresponding to the broadcast message. Therefore, a process of frequently awakening the application software is avoided when there are plenty of broadcast messages. In addition, the application software being not frequently awakened can effectively reduce energy consumption of the terminal.

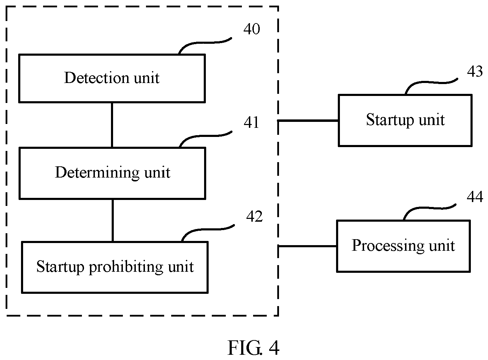

Based on the technical solution, referring to FIG. 4, an embodiment of the present invention further provides a terminal control apparatus, including a detection unit 40, a determining unit 41, and a startup prohibiting unit 42.

The detection unit 40 is configured to detect a message received by a terminal from the outside.

The determining unit 41 is configured to receive a detection result sent by the detection unit 40, and when the detection result is that the message is a broadcast message, determine whether the broadcast message is an unwanted broadcast message.

The startup prohibiting unit 42 is configured to receive a determining result sent by the determining unit 41, and when the determining result is that the broadcast message is an unwanted broadcast message, prohibit starting of an operating system of the terminal, if the terminal is in a standby state.

Optionally, the detection unit 40 is specifically configured to: obtain a user identifier included in the message, and if the user identifier corresponds to any application software included in the terminal or the user identifier corresponds to the operating system of the terminal, determine that the message is a broadcast message; or obtain a message type included in the message, and when the message type is a broadcast message type, determine that the message is a broadcast message.

Optionally, when configured to determine whether the broadcast message is an unwanted broadcast message, the determining unit 41 is specifically configured to: search a preset user identifier list for prohibiting starting of an operating system for the user identifier included in the broadcast message; and when the user identifier is included in the preset user identifier list for prohibiting starting of an operating system, determine that the broadcast message is an unwanted broadcast message.

Optionally, the startup prohibiting unit 42 is specifically configured to: obtain a process corresponding to the user identifier included in the broadcast message; obtain application software or an operating system corresponding to the process; obtain status information corresponding to the application software or the operating system from a status list saved in the terminal, where the status list is used to save status information about whether each application software or the operating system installed in the terminal is started; and when the status information corresponding to the application software or the operating system is the standby state, remove a recipient identifier corresponding to the broadcast message from a recipient identifier list saved in the terminal, so as to prohibit starting of the operating system that is of the terminal and in the standby state, where the recipient identifier list is used to save a recipient identifier corresponding to the message received by the terminal from the outside, and the recipient identifier corresponds to the application software or the operating system; or remove the user identifier included in the broadcast message from a recipient identifier list saved in the terminal, so as to prohibit starting of the operating system that is of the terminal and in the standby state.

Further, a startup unit 43 is further included and is configured to: when it is determined that the broadcast message is a wanted broadcast message, if the user identifier included in the broadcast message corresponds to the operating system, start the operating system that is of the terminal and in the standby state; or if the user identifier included in the broadcast message corresponds to any application software installed in the terminal, start the operating system that is of the terminal and in the standby state, and start the any application software.

Further, a processing unit 44 is further included and is configured to: if the terminal is in a started state, when the message is a wanted broadcast message and the user identifier included in the message corresponds to any application software installed in the terminal, start the any application software; or when the message is an unwanted broadcast message and the user identifier included in the broadcast message corresponds to any application software installed in the terminal, prohibit starting of the any application software.

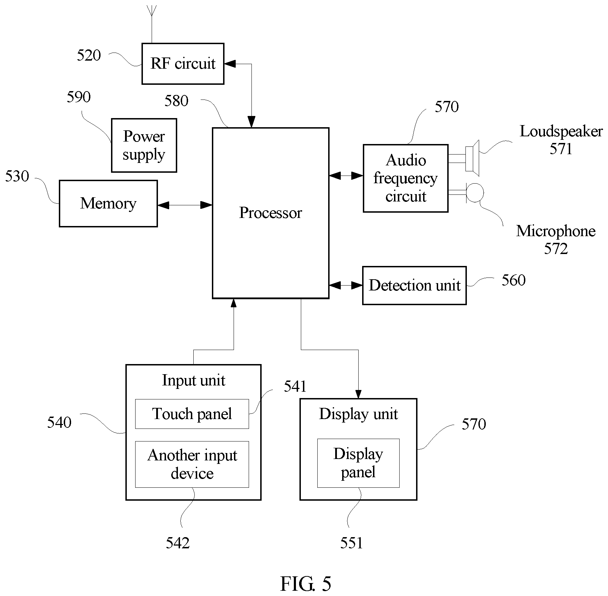

Based on the technical solution, referring to FIG. 5, FIG. 5 is a schematic structural diagram of a terminal device according to an embodiment of the present invention. The terminal device provided in this embodiment of the present invention may be configured to implement the methods implemented in the embodiments of the present invention that are shown in FIG. 1 to FIG. 3A and FIG. 3B. For ease of description, only a part related to this embodiment of the present invention is shown. For specific technical details that are not disclosed, refer to the embodiments of the present invention that are shown in FIG. 1 to FIG. 3A and FIG. 3B.

The mobile terminal may be a terminal device such as a mobile phone, a tablet, a notebook computer, a UMPC (Ultra-mobile Personal Computer, ultra-mobile personal computer), a netbook, or a PDA (Personal Digital Assistant, personal digital assistant). In this embodiment of the present invention, that the mobile terminal is a mobile phone is used as an example for description. FIG. 5 shows a block diagram of a partial structure of a mobile phone 500 related to the embodiments of the present invention.

As shown in FIG. 5, the mobile phone 500 includes components such as an RF (radio frequency, radio frequency) circuit 520, a memory 530, an input unit 550, a display unit 550, a detection unit 560, an audio frequency circuit 570, a processor 580, and a power supply 590. Persons skilled in the art may understand that the structure of the mobile phone shown in FIG. 5 constitutes no limitation on the mobile phone, and instead the mobile phone may include components more or fewer than those shown in the figure, or a combination of some components, or have different component arrangements.

The following describes the components of the mobile phone 500 in detail with reference to FIG. 5.

The RF circuit 520 may be configured to receive and send a signal in an information receiving and sending process or a call process; and in particular, after receiving downlink information of a base station, send the downlink information to the processor 580 for processing; and in addition, send uplink data to the base station. Generally, the RF circuit 520 includes but is not limited to an antenna, at least one amplifier, a transceiver, a coupler, an LNA (low noise amplifier, low noise amplifier), a duplexer, and the like. In addition, the RF circuit 520 may further communicate with a network and another device by means of wireless communications. The wireless communications may use any communication standard or protocol that includes but is not limited to GSM (global system of mobile communication, Global System for Mobile Communications), GPRS (general packet radio service, general packet radio service), CDMA (code division multiple access, Code Division Multiple Access), WCDMA (wideband code division multiple access, Wideband Code Division Multiple Access), LTE (long term evolution, Long Term Evolution), email, SMS (short messaging service, short message service message service), and the like.

The memory 530 may be configured to save a software program and a module, and the processor 580 executes various functional applications of the mobile phone 500 and performs data processing by running the software program and the module saved in the memory 530. The memory 530 may mainly include a program storage area and a data storage area. The program storage area may save an operating system, an application program required by at least one function (such as an audio playback function or a video playback function), and the like. The data storage area may save data (such as audio data, video data, or a phonebook) created according to use of the mobile phone 500, and the like. In addition, the memory 530 may include a high-speed random access memory, and may further include a non-volatile memory, such as at least one magnetic disk storage device, a flash device, or another volatile solid-state storage device.

The input unit 540 may be configured to receive entered digits or character information, and generate key signal input related to user setting and function control of the mobile phone 500. Specifically, the input unit 540 may include a touchscreen 541 and another input device 542. The touchscreen 541 is also referred to as a touch panel, and may collect a touch operation (such as an operation performed by a user on the touchscreen 541 or near the touchscreen 541 by using any proper object or accessory, such as a finger or a stylus) on or near the touchscreen, and drive a corresponding connection apparatus according to a preset program. Optionally, the touchscreen 541 may include two parts: a touch detection apparatus and a touch controller. The touch detection apparatus detects a touch position of the user, detects a signal brought by the touch operation, and send the signal to the touch controller. The touch controller receives touch information from the touch detection apparatus, converts the touch information into contact coordinates, sends the contact coordinates to the processor 580, and can receive and execute a command sent by the processor 580. In addition, the touchscreen 541 may be implemented in multiple types, such as a resistive type, a capacitive type, infrared, and a surface acoustic wave. The input unit 540 may include the another input device 542 in addition to the touchscreen 541. Specifically, the another input device 542 may include but is not limited to one or more of a physical keyboard, a function key (such as a volume control key or a power switch key), a trackball, a mouse, a joystick, or the like.

The display unit 550 may be configured to display information entered by the user or information provided for the user, and various menus of the mobile phone 500. The display unit 550 may include a display panel 551, and optionally, the display panel 551 may be configured in a form of an LCD (Liquid Crystal Display, liquid crystal display), an OLED (Organic Light-Emitting Diode, organic light-emitting diode), or the like. Further, the touchscreen 541 may cover the display panel 551. When detecting a touch operation on or near the touchscreen 541, the touchscreen 541 transmits the touch operation to the processor 580 to determine a type of a touch event, and then the processor 580 provides corresponding visual output on the display panel 551 according to the type of a touch event. In FIG. 5, the touchscreen 541 and the display panel 551 are used as two independent components to implement input and output functions of the mobile phone 500. However, in some embodiments, the touchscreen 541 and the display panel 551 may be integrated to implement the input and output functions of the mobile phone 500.

The detection unit 560 may be configured to identify a touch object, detect a location in which the touch object points to the mobile phone and that is above the touchscreen 541, and obtain a distance between the touch object and the touchscreen of the mobile phone. The detection unit 560 may include several cameras installed in two horizontal and vertical frames that are mutually perpendicular and on a touchscreen edge on a terminal screen, so as to collect an image above the touchscreen and then obtain the location in which the touch object points to the touchscreen and the distance between the touch object and the touchscreen. The detection unit 560 may further include infrared sensors installed in two horizontal and vertical frames that are mutually perpendicular and on a touchscreen edge on the terminal screen, so as to obtain the location in which the touch object points to the touchscreen and the distance between the touch object and the touchscreen. In addition, the detection unit 560 may further include several capacitor plates installed below the touchscreen. When the touch object approaches the touchscreen, the capacitor plates can obtain a corresponding capacitor value; and when the touch object is located in different locations above the touchscreen, the capacitor value is detected by different capacitor plates. When a distance in which the touch object is located above the touchscreen changes, capacitor values corresponding to the capacitor plates changes; and the distance between the touch object and the touchscreen is obtained by detecting a change of the capacitor value. In addition, the detection unit 560 may further obtain the location in which the touch object points to the touchscreen and the distance between the touch object and the touchscreen by using a component configured to measure inductance or magnetic field strength and by means of an inductance change or a magnetic field change.

The mobile phone 500 may further include other various sensors, such as a light sensor and a gravity sensor. Specifically, a light sensor may include an ambient light sensor and an optical proximity sensor. The ambient light sensor may adjust brightness of the display panel 551 according to brightness of ambient light. The optical proximity sensor may detect whether there is an object approaching or touching the mobile phone, and may close the display panel 551 and/or backlight when the mobile phone 500 approaches an ear. The gravity sensor (gravity sensor) may detect an acceleration value that is of the mobile phone and in each direction (generally three axes), may detect a value and a direction of gravity when the gravity sensor is static, and may be applicable to applications for identifying a mobile phone posture (such as a switch between landscape and portrait screens, related games, and magnetometer posture calibration), a function related to vibration recognition (a pedometer or a knock), and the like. Other sensors such as a gyroscope, a barometer, a hygrometer, a thermometer, an infrared sensor may also be disposed on the mobile phone 500, and details are not described herein.

An audio circuit 570, a loudspeaker 571, and a microphone 572 may provide audio interfaces between the user and the mobile phone 500. The audio circuit 570 may transmit an electrical signal that is converted from received audio data to the loudspeaker 571, and the loudspeaker 571 converts the electrical signal into a sound signal for output. On the other hand, the microphone 572 converts a collected sound signal into an electrical signal; and the electrical signal is received by the audio circuit 570 and is converted into audio data, and then the audio data is output to the RF circuit 520 and is sent to, for example, another mobile phone, or the audio data is output to the memory 530 for further processing.

The processor 580 is a control center of the mobile phone 500, and uses various interfaces and lines to connect all parts of the entire mobile phone. By running or executing a software program and/or a module saved in the memory 530 and invoking data saved in the memory 530, the processor 580 executes various functions of the mobile phone 500 and processes data so as to perform overall monitoring on the mobile phone. Optionally, the processor 580 may include one or more processing units. Preferably, an application processor and a modulation and demodulation processor may be integrated into the processor 580, where the application processor mainly processes an operating system, a user interface, an application program, and the like; and the modulation and demodulation processor mainly processes wireless communications. It may be understood that the modulation and demodulation processor may not be integrated into the processor 580.

The mobile phone 500 further includes the power supply 590 (such as a battery) that supplies power to each part. Preferably, the power supply may be logically connected to the processor 580 by using a power management system, so as to implement functions such as charging and discharging management, and power consumption management by using the power management system.

Although not shown, the mobile phone 500 may further include a WiFi (wireless fidelity, Wireless Fidelity) module, a Bluetooth module, and the like, and details are not described herein.

In this embodiment of the present invention, the RF circuit 520 is configured to receive a message from the outside, and send the received message to the processor 580.

The processor 580 is configured to detect the message received by the RF circuit 520; when detecting that the message is a broadcast message, determine whether the broadcast message is an unwanted broadcast message; and when the broadcast message is an unwanted broadcast message, if the terminal device is in a standby state, prohibit starting of an operating system of the terminal device.

Optionally, when detecting the message received by the terminal from the outside, the processor 580 is specifically configured to: obtain a user identifier included in the message, and if the user identifier corresponds to any application software included in the terminal device or the user identifier corresponds to the operating system of the terminal device, determine that the message is a broadcast message; or obtain a message type included in the message, and when the message type is a broadcast message type, determine that the message is a broadcast message.

Optionally, the memory 530 is further configured to save a user identifier list for prohibiting starting of an operating system. The user identifier list for prohibiting starting of an operating system includes a user identifier for which starting of an operating system is not allowed to be triggered.

Optionally, when configured to determine whether the broadcast message is an unwanted broadcast message, the processor 580 is specifically configured to: search a preset user identifier list for prohibiting starting of an operating system for the user identifier included in the broadcast message; and when the user identifier is included in the preset user identifier list for prohibiting starting of an operating system, determine that the broadcast message is an unwanted broadcast message.

Optionally, the memory 530 is further configured to save a status list. The status list is used to save status information of each application software or the operating system.

Optionally, the memory 530 is further configured to save the status list, where the status list is used to save status information about whether each application software or the operating system installed in the terminal device is started; and save a recipient identifier list, where the recipient identifier list is used to save a recipient identifier corresponding to the message received by the terminal device, and the recipient identifier corresponds to the application software or the operating system.

Optionally, when the broadcast message is an unwanted broadcast message and the terminal is located in the standby state, that the processor 580 prohibits starting of the operating system of the terminal is specifically: The processor 580 obtains a process corresponding to the user identifier included in the broadcast message; obtains application software or an operating system corresponding to the process; and obtains status information corresponding to the application software or the operating system from a status list saved in the memory 530; and when the status information corresponding to the application software or the operating system is the standby state, removes a recipient identifier corresponding to the broadcast message from the recipient identifier list, so as to prohibit starting of the operating system that is of the terminal device and in the standby state, or removes the user identifier included in the broadcast message from the recipient identifier list saved in the terminal, so as to prohibit starting of the operating system that is of the terminal and in the standby state.

Further, the processor 580 is further configured to: when it is determined that the broadcast message is a wanted broadcast message, if the user identifier included in the broadcast message corresponds to the operating system, start the operating system that is of the terminal device and in the standby state; or if the user identifier included in the broadcast message corresponds to any application software installed in the terminal device, start the operating system that is of the terminal device and in the standby state, and start the any application software.

Further, the processor 580 is further configured to: if the terminal device is in a started state, when the message is a wanted broadcast message and the user identifier included in the message corresponds to any application software installed in the terminal device, start the any application software; or when the message is an unwanted broadcast message and the user identifier included in the broadcast message corresponds to any application software installed in the terminal device, prohibit starting of the any application software.

In conclusion, in this embodiment of the present invention, when determining that a currently received message is a broadcast message, a terminal determines whether the broadcast message is an unwanted broadcast message according to a user identifier included in the broadcast message; and when determining that the broadcast message is an unwanted broadcast message, reversely searches for a recipient identifier corresponding to the unwanted broadcast message, and removes the recipient identifier from a recipient identifier list, so that the recipient skips receiving the foregoing unwanted broadcast message. This avoids triggering starting of an operating system after application software or the operating system receives the foregoing unwanted broadcast message, thereby avoiding a problem of high system power consumption caused by frequent starting of the operating system, reducing the system power consumption, and extending usage time of the terminal.

Persons skilled in the art should understand that the embodiments of the present invention may be provided as a method, an operating system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (operating system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be saved in a computer readable memory that can instruct the computer or any other programmable data processing device to work in a specific manner, so that the instructions saved in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the scope of the embodiments of the present invention. The present invention is intended to cover these modifications and variations provided that they fall within the scope of protection defined by the following claims and their equivalent technologies.

## Claims

1. A terminal control method, comprising:
detecting (100) a message received by a terminal from the outside;
when (110) detecting that the message is a broadcast message, determining whether the broadcast message is an unwanted broadcast message; and
when the broadcast message is an unwanted broadcast message, if the terminal is in a standby state, prohibiting (120) starting of an operating system of the terminal;
wherein the method further comprises:
when it is determined that the broadcast message is a wanted broadcast message, if the user identifier comprised in the broadcast message corresponds to the operating system, starting the operating system of the terminal that is in the standby state; or if the user identifier comprised in the broadcast message corresponds to any application software installed in the terminal, starting the operating system of the terminal that is in the standby state, and starting the application software.

2. The method according to claim 1, wherein the detecting a message received by a terminal from the outside comprises:
obtaining a user identifier comprised in the message, and if the user identifier corresponds to any application software comprised in the terminal or the user identifier corresponds to the operating system of the terminal, determining that the message is a broadcast message; or
obtaining a message type comprised in the message, and when the message type is a broadcast message type, determining that the message is a broadcast message.

3. The method according to claim 1 or 2, wherein the determining whether the broadcast message is an unwanted broadcast message comprises:
searching a preset user identifier list for prohibiting starting of an operating system for the user identifier comprised in the broadcast message; and
when the user identifier is comprised in the preset user identifier list for prohibiting starting of an operating system, determining that the broadcast message is an unwanted broadcast message.

4. The method according to any one of claims 1 to 3, wherein when the broadcast message is an unwanted broadcast message, if the terminal is in a standby state, the prohibiting starting of an operating system of the terminal comprises:
obtaining a process corresponding to the user identifier comprised in the broadcast message;
obtaining application software or an operating system corresponding to the process;
obtaining status information corresponding to the application software or the operating system from a status list saved in the terminal, wherein the status list is used to save status information about whether each application software or the operating system installed in the terminal is started; and
when the status information corresponding to the application software or the operating system is the standby state, removing a recipient identifier corresponding to the broadcast message from a recipient identifier list saved in the terminal, so as to prohibit starting of the operating system that is of the terminal and in the standby state, wherein the recipient identifier list is used to save a recipient identifier corresponding to the message received by the terminal from the outside, and the recipient identifier corresponds to the application software or the operating system installed in the terminal; or removing the user identifier comprised in the broadcast message from a recipient identifier list saved in the terminal, so as to prohibit starting of the operating system that is of the terminal and in the standby state.

5. The method according to any one of claims 1 to 4, further comprising:
if the terminal is in a started state, when the message is a wanted broadcast message and the user identifier comprised in the message corresponds to any locally installed application software, starting the any application software; or when the message is an unwanted broadcast message and the user identifier comprised in the broadcast message corresponds to any application software installed in the terminal, prohibiting starting of the any application software.

6. A terminal control apparatus, comprising:
a detection unit (40), configured to detect a message received by a terminal from the outside;
a determining unit (41), configured to receive a detection result sent by the detection unit, and when the detection result is that the message is a broadcast message, determine whether the broadcast message is an unwanted broadcast message; and
a startup prohibiting unit (42), configured to receive a determining result sent by the determining unit, and when the determining result is that the broadcast message is an unwanted broadcast message, prohibit starting of an operating system of the terminal, if the terminal is in a standby state;
wherein the terminal control apparatus further comprises a startup unit configured to:
when it is determined that the broadcast message is a wanted broadcast message, if the user identifier comprised in the broadcast message corresponds to the operating system, start the operating system of the terminal that is in the standby state; or if the user identifier comprised in the broadcast message corresponds to any application software installed in the terminal, start the operating system of the terminal that is in the standby state, and start the application software.

7. The apparatus according to claim 6, wherein the detection unit is specifically configured to:
obtain a user identifier comprised in the message, and if the user identifier corresponds to any application software comprised in the terminal or the user identifier corresponds to the operating system of the terminal, determine that the message is a broadcast message; or
obtain a message type comprised in the message, and when the message type is a broadcast message type, determine that the message is a broadcast message.

8. The apparatus according to claim 6 or 7, wherein when configured to determine whether the broadcast message is an unwanted broadcast message, the determining unit is specifically configured to:
search a preset user identifier list for prohibiting starting of an operating system for the user identifier comprised in the broadcast message, and when the user identifier is comprised in the preset user identifier list for prohibiting starting of an operating system, determine that the broadcast message is an unwanted broadcast message.

9. The apparatus according to any one of claims 6 to 8, the startup prohibiting unit is specifically configured to:
obtain a process corresponding to the user identifier comprised in the broadcast message;
obtain application software or an operating system corresponding to the process;
obtain status information corresponding to the application software or the operating system from a status list saved in the terminal, wherein the status list is used to save status information about whether each application software or the operating system installed in the terminal is started; and
when the status information corresponding to the application software or the operating system is the standby state, remove a recipient identifier corresponding to the broadcast message from a recipient identifier list saved in the terminal, so as to prohibit starting of the operating system that is of the terminal and in the standby state, wherein the recipient identifier list is used to save a recipient identifier corresponding to the message received by the terminal from the outside, and the recipient identifier corresponds to the application software or the operating system; or remove the user identifier comprised in the broadcast message from a recipient identifier list saved in the terminal, so as to prohibit starting of the operating system that is of the terminal and in the standby state.

10. The apparatus according to any one of claims 6 to 9, wherein a processing unit is further comprised and is configured to:
if the terminal is in a started state, when the message is a wanted broadcast message and the user identifier comprised in the message corresponds to any application software installed in the terminal, start the any application software; or when the message is an unwanted broadcast message and the user identifier comprised in the broadcast message corresponds to any application software installed in the terminal, prohibit starting of the any application software.

11. A terminal comprising a terminal control apparatus according to any of claims 6 to 10.

## Patentansprüche

1. Endgerätesteuerungsverfahren, umfassend:
Erkennen (100) einer durch ein Endgerät von außen empfangenen Nachricht;
beim Erkennen (110), dass die Nachricht eine Broadcast-Nachricht ist, Bestimmen, ob die Broadcast-Nachricht eine unerwünschte Broadcast-Nachricht ist; und
wenn die Broadcast-Nachricht eine unerwünschte Broadcast-Nachricht ist, wenn sich das Endgerät in einem Standby-Zustand befindet, Verhindern (120) des Startens eines Betriebssystems des Endgeräts;
wobei das Verfahren ferner umfasst:
wenn bestimmt wird, dass die Broadcast-Nachricht eine erwünschte Broadcast-Nachricht ist, wenn die in der Broadcast-Nachricht umfasste Benutzerkennung dem Betriebssystem entspricht, Starten des Betriebssystems des Endgeräts, das sich im Standby-Zustand befindet; oder
wenn die in der Broadcast-Nachricht enthaltene Benutzerkennung einer im Endgerät installierten Anwendungssoftware entspricht, Starten des Betriebssystems des Endgeräts, das sich im Standby-Zustand befindet, und Starten der Anwendungssoftware.

2. Verfahren nach Anspruch 1, wobei das Erkennen einer von einem Endgerät von außen empfangenen Nachricht umfasst:
Erhalten einer Benutzerkennung, die in der Nachricht umfasst ist, und wenn die Benutzerkennung einer beliebigen Anwendungssoftware entspricht, die in dem Endgerät umfasst ist, oder die Benutzerkennung dem Betriebssystem des Endgeräts entspricht, Bestimmen, dass die Nachricht eine Broadcast-Nachricht ist; oder
Erhalten eines Nachrichtentyps, der in der Nachricht enthalten ist, und wenn der Nachrichtentyp ein Broadcast-Nachrichtentyp ist, Bestimmen, dass die Nachricht eine Broadcast-Nachricht ist.

3. Verfahren nach Anspruch 1 oder 2, wobei das Bestimmen, ob die Broadcast-Nachricht eine unerwünschte Broadcast-Nachricht ist, umfasst:
Durchsuchen einer voreingestellten Benutzerkennungsliste zum Verhindern des Starts eines Betriebssystems für die Benutzerkennung, die in der Broadcast-Nachricht umfasst ist; und
wenn die Benutzerkennung in der voreingestellten Liste der Benutzerkennungen zum Verhindern des Starts eines Betriebssystems umfasst ist, Bestimmen, dass die Broadcast-Nachricht eine unerwünschte Broadcast-Nachricht ist.

4. Verfahren nach einem der Ansprüche 1 bis 3, wobei, wenn die Broadcast-Nachricht eine unerwünschte Broadcast-Nachricht ist, wenn sich das Endgerät in einem Standby-Zustand befindet, das Verhindern des Starts eines Betriebssystems des Endgeräts umfasst:
Erhalten eines Prozesses, der der in der Broadcast-Nachricht enthaltenen Benutzerkennung entspricht;
Erhalten einer Anwendungssoftware oder eines dem Prozess entsprechenden Betriebssystems;
Erhalten von Statusinformationen, die der Anwendungssoftware oder dem Betriebssystem entsprechen, aus einer im Endgerät gespeicherten Statusliste, wobei die Statusliste verwendet wird, um Statusinformationen darüber zu speichern, ob jede Anwendungssoftware oder das in dem Endgerät installierte Betriebssystem gestartet wird; und
wenn die der Anwendungssoftware oder dem Betriebssystem entsprechenden Statusinformationen der Standby-Zustand sind, Entfernen einer der Broadcast-Nachricht entsprechenden Empfängerkennung aus einer im Endgerät gespeicherten Empfängerkennungsliste, um das Starten des Betriebssystems, das sich im Endgerät und im Standby-Zustand befindet, zu verhindern, wobei die Empfängerkennungsliste verwendet wird, um eine der vom Endgerät empfangenen Nachricht entsprechende Empfängerkennung von außen zu speichern, und die Empfängerkennung der Anwendungssoftware oder dem im Endgerät installierten Betriebssystem entspricht;
oder Entfernen der in der Broadcast-Nachricht enthaltenen Benutzerkennung aus einer im Endgerät gespeicherten Empfängerkennungsliste, um das Starten des Betriebssystems, das dem Endgerät eigen ist und sich im Standby-Zustand befindet, zu verhindern.

5. Verfahren nach einem der Ansprüche 1 bis 4, ferner umfassend:
wenn sich das Endgerät in einem Startzustand befindet, wenn die Nachricht eine erwünschte Broadcast-Nachricht ist und die in der Nachricht enthaltene Benutzerkennung einer lokal installierten Anwendungssoftware entspricht, Starten der jeweiligen Anwendungssoftware; oder wenn die Nachricht eine unerwünschte Broadcast-Nachricht ist und die in der Broadcast-Nachricht enthaltene Benutzerkennung einer im Endgerät installierten Anwendungssoftware entspricht, Verhindern des Starts der jeweiligen Anwendungssoftware.

6. Endgerätesteuerungsvorrichtung, umfassend:
eine Erkennungseinheit (40), die zum Erkennen einer von einem Endgerät von außen empfangenen Nachricht konfiguriert ist;
eine Bestimmungseinheit (41), die zum Empfangen eines von der Erkennungseinheit gesendeten Erkennungsergebnisses konfiguriert ist, und wenn das Erkennungsergebnis besagt, dass die Nachricht eine Broadcast-Nachricht ist, Bestimmen, ob die Broadcast-Nachricht eine unerwünschte Broadcast-Nachricht ist; und
eine Startverhinderungseinheit (42), die zum Empfangen eines von der Bestimmungseinheit gesendeten Bestimmungsergebnisses konfiguriert ist, und wenn das Bestimmungsergebnis besagt, dass die Broadcast-Nachricht eine unerwünschte Broadcast-Nachricht ist, Verhindern des Starts eines Betriebssystems des Endgeräts, wenn sich das Endgerät in einem Standby-Zustand befindet;
wobei die Endgerätesteuerungsvorrichtung ferner eine Starteinheit umfasst, die konfiguriert ist, um:
wenn bestimmt wird, dass die Broadcast-Nachricht eine erwünschte Broadcast-Nachricht ist, wenn die in der Broadcast-Nachricht enthaltene Benutzerkennung dem Betriebssystem entspricht, Starten des Betriebssystems des Endgeräts, das sich im Standby-Zustand befindet; oder wenn die in der Broadcast-Nachricht enthaltene Benutzerkennung einer im Endgerät installierten Anwendungssoftware entspricht, Starten des Betriebssystems des Endgeräts, das sich im Standby- Zustand befindet, und Starten der Anwendungssoftware.

7. Vorrichtung nach Anspruch 6, wobei die Erkennungseinheit insbesondere konfiguriert ist zum:
Erhalten einer Benutzerkennung, die in der Nachricht umfasst ist, und wenn die Benutzerkennung einer Anwendungssoftware entspricht, die in dem Endgerät umfasst ist, oder die Benutzerkennung dem Betriebssystem des Endgeräts entspricht, Bestimmen, dass die Nachricht eine Broadcast-Nachricht ist; oder
Erhalten eines Nachrichtentyps, der in der Nachricht enthalten ist, und wenn der Nachrichtentyp ein Broadcast-Nachrichtentyp ist, Bestimmen, dass die Nachricht eine Broadcast-Nachricht ist.

8. Vorrichtung nach Anspruch 6 oder 7, wobei, wenn sie zum Bestimmen, ob die Broadcast-Nachricht eine unerwünschte Broadcast-Nachricht ist, konfiguriert ist, die Bestimmungseinheit spezifisch konfiguriert ist zum:
Durchsuchen einer voreingestellten Benutzerkennungsliste zum Verhindern des Starts eines Betriebssystems für die in der Broadcast-Nachricht enthaltene Benutzerkennung, und wenn die Benutzerkennung in der voreingestellten Benutzerkennungsliste zum Verhindern des Starts eines Betriebssystems umfasst ist, Bestimmen, dass die Broadcast-Nachricht eine unerwünschte Broadcast-Nachricht ist.

9. Vorrichtung nach einem der Ansprüche 6 bis 8, wobei die Anlaufverhinderungseinheit insbesondere konfiguriert ist zum:
Erhalten eines Prozesses, der der in der Broadcast-Nachricht enthaltenen Benutzerkennung entspricht;
Erhalten einer Anwendungssoftware oder eines dem Prozess entsprechenden Betriebssystems; Erhalten von Statusinformationen, die der Anwendungssoftware oder dem Betriebssystem entsprechen, aus einer im Endgerät gespeicherten Statusliste, wobei die Statusliste verwendet wird, um Statusinformationen darüber zu speichern, ob jede Anwendungssoftware oder das im Endgerät installierte Betriebssystem gestartet wird; und
wenn die der Anwendungssoftware oder dem Betriebssystem entsprechenden Statusinformationen der Standby-Zustand sind, Entfernen einer der Broadcast-Nachricht entsprechenden Empfängerkennung aus einer im Endgerät gespeicherten Empfängerkennungsliste, um das Starten des Betriebssystems, das dem Endgerät eigen ist und sich im Standby-Zustand befindet, zu verhindern, wobei die Empfängerkennungsliste verwendet wird, um eine der vom Endgerät empfangenen Nachricht entsprechende Empfängerkennung von außen zu speichern, und die Empfängerkennung der Anwendungssoftware oder dem Betriebssystem entspricht;
oder Entfernen der in der Broadcast-Nachricht umfassten Benutzerkennung aus einer im Endgerät gespeicherten Empfängerkennungsliste, um das Starten des Betriebssystems, das dem Endgerät eigen ist und sich im Standby-Zustand befindet, zu verhindern.

10. Vorrichtung nach einem der Ansprüche 6 bis 9, wobei eine Verarbeitungseinheit ferner umfasst ist und konfiguriert ist zu:
wenn sich das Endgerät in einem Startzustand befindet, wenn die Nachricht eine erwünschte Broadcast-Nachricht ist und die in der Nachricht enthaltene Benutzerkennung einer im Endgerät installierten Anwendungssoftware entspricht, Starten der beliebigen Anwendungssoftware; oder wenn die Nachricht eine unerwünschte Broadcast-Nachricht ist und die in der Broadcast-Nachricht enthaltene Benutzerkennung einer im Endgerät installierten Anwendungssoftware entspricht, Verhindern des Startens der jeweiligen Anwendungssoftware.

11. Endgerät, umfassend eine Endgerätesteuerungsvorrichtung nach einem der Ansprüche 6 bis 10.

## Revendications

1. Procédé de commande de terminal, comprenant :
détection (100) d'un message reçu par un terminal depuis l'extérieur ;
lorsque (110) la détection indique que le message est un message diffusé, détermination si le message diffusé est un message diffusé non désiré ; et
lorsque le message diffusé est un message diffusé non désiré, si le terminal se trouve dans un état de veille, interdiction (120) du démarrage d'un système d'exploitation du terminal ;
le procédé comprenant en outre :
lorsqu'il est déterminé que le message diffusé est un message diffusé désiré, si l'identificateur d'utilisateur compris dans le message diffusé correspond au système d'exploitation, démarrage du système d'exploitation du terminal qui se trouve à l'état de veille ; ou
si l'identificateur d'utilisateur compris dans le message diffusé correspond à un logiciel d'application quelconque installé dans le terminal, démarrage du système d'exploitation du terminal qui se trouve à l'état de veille et démarrage du logiciel d'application.

2. Procédé selon la revendication 1, la détection d'un message reçu par un terminal depuis l'extérieur comprenant :
obtention d'un identificateur d'utilisateur compris dans le message et, si l'identificateur d'utilisateur compris dans le message diffusé correspond à un logiciel d'application quelconque installé dans le terminal ou si l'identificateur d'utilisateur correspond au système d'exploitation du terminal, détermination que le message et un message diffusé ; ou
obtention d'un type de message compris dans le message, et lorsque le type de message est un type de message diffusé, détermination que le message est un message diffusé.

3. Procédé selon la revendication 1 ou 2, la détermination si le message diffusé est un message diffusé non désiré comprenant :
recherche, dans une liste d'identificateurs d'utilisateur prédéfinie pour interdire le démarrage d'un système d'exploitation, de l'identificateur d'utilisateur compris dans le message diffusé ; et
lorsque l'identificateur d'utilisateur est compris dans la liste d'identificateurs d'utilisateur prédéfinie pour interdire le démarrage du système d'exploitation, détermination que le message diffusé est un message diffusé non désiré.

4. Procédé selon l'une quelconque des revendications 1 à 3, lorsque le message diffusé est un message diffusé non désiré, si le terminal trouve à l'état de veille, l'interdiction du démarrage d'un système d'exploitation du terminal comprenant :
obtention d'un processus correspondant à l'identificateur d'utilisateur compris dans le message diffusé ;
obtention d'un logiciel d'application ou d'un système d'exploitation correspondant au processus ;
obtention d'informations d'état correspondant au logiciel d'application ou au système d'exploitation à partir d'une liste d'états enregistrée dans le terminal, la liste d'états étant utilisée pour enregistrer des informations d'état à propos de l'état démarré ou non de chaque logiciel d'application ou du système d'exploitation installé dans le terminal ; et
lorsque les informations d'état correspondant au logiciel d'application ou au système d'exploitation sont l'état de veille, suppression d'un identificateur de destinataire correspondant au message diffusé d'une liste d'identificateurs de destinataire enregistrée dans le terminal, de manière à interdire le démarrage du système d'exploitation qui est du terminal et qui se trouve à l'état de veille, la liste d'identificateurs de destinataire étant utilisée pour enregistrer un identificateur de destinataire correspondant au message reçu par le terminal depuis l'extérieur, et l'identificateur de destinataire correspondant au logiciel d'application ou au système d'exploitation installé dans le terminal ; ou suppression de l'identificateur de destinataire compris dans le message diffusé d'une liste d'identificateurs de destinataire enregistrée dans le terminal, de manière à interdire le démarrage du système d'exploitation qui est du terminal et qui se trouve à l'état de veille.

5. Procédé selon l'une quelconque des revendications 1 à 4, comprenant en outre :
si le terminal se trouve dans un état démarré, lorsque le message est un message diffusé désiré et l'identificateur d'utilisateur compris dans le message correspond à un logiciel d'application quelconque installé localement, démarrage du logiciel d'application quelconque ; ou lorsque le message est un message diffusé non désiré et l'identificateur d'utilisateur compris dans le message correspond à un logiciel d'application quelconque installé localement, interdiction du démarrage du logiciel d'application quelconque.

6. Appareil de commande de terminal, comprenant :
une unité de détection (40), configurée pour détecter un message reçu par un terminal depuis l'extérieur ;
une unité de détermination (41), configurée pour recevoir un résultat de détection envoyé par l'unité de détection et, lorsque le résultat de la détection indique que le message est un message diffusé, déterminer si le message diffusé est un message diffusé non désiré ; et
une unité d'interdiction de démarrage (42), configurée pour recevoir un résultat de détermination envoyé par l'unité de détermination, et lorsque le message diffusé est un message diffusé non désiré, interdire le démarrage d'un système d'exploitation du terminal si le terminal se trouve dans un état de veille ;
l'appareil de commande de terminal comprenant en outre une unité de démarrage configurée pour :
lorsqu'il est déterminé que le message diffusé est un message diffusé désiré, si l'identificateur d'utilisateur compris dans le message diffusé correspond au système d'exploitation, démarrer le système d'exploitation du terminal qui se trouve à l'état de veille ; ou si
l'identificateur d'utilisateur compris dans le message diffusé correspond à un logiciel d'application quelconque installé dans le terminal, démarrer le système d'exploitation du terminal qui se trouve à l'état de veille et démarrer le logiciel d'application.

7. Appareil selon la revendication 6, l'unité de détection étant spécifiquement configurée pour :
obtenir un identificateur d'utilisateur compris dans le message et, si l'identificateur d'utilisateur correspond à un logiciel d'application quelconque installé dans le terminal ou si l'identificateur d'utilisateur correspond au système d'exploitation du terminal, déterminer que le message et un message diffusé ; ou
obtenir un type de message compris dans le message, et lorsque le type de message est un type de message diffusé, déterminer que le message est un message diffusé.

8. Procédé selon la revendication 6 ou 7, lorsqu'elle est configurée pour déterminer si le message diffusé est un message diffusé non désiré, l'unité de détection étant spécifiquement configurée pour :
rechercher, dans une liste d'identificateurs d'utilisateur prédéfinie pour interdire le démarrage d'un système d'exploitation, l'identificateur d'utilisateur compris dans le message diffusé, et lorsque l'identificateur d'utilisateur est compris dans la liste d'identificateurs d'utilisateur prédéfinie pour interdire le démarrage d'un système d'exploitation, déterminer que le message diffusé est un message diffusé non désiré.

9. Appareil selon l'une quelconque des revendications 6 à 8, l'unité d'interdiction de démarrage étant spécifiquement configurée pour :
obtenir un processus correspondant à l'identificateur d'utilisateur compris dans le message diffusé ;
obtenir un logiciel d'application ou un système d'exploitation correspondant au processus ;
obtenir des informations d'état correspondant au logiciel d'application ou au système d'exploitation à partir d'une liste d'états enregistrée dans le terminal, la liste d'états étant utilisée pour enregistrer des informations d'état à propos de l'état démarré ou non de chaque logiciel d'application ou du système d'exploitation installé dans le terminal ; et
lorsque les informations d'état correspondant au logiciel d'application ou au système d'exploitation sont l'état de veille, supprimer un identificateur de destinataire correspondant au message diffusé d'une liste d'identificateurs de destinataire enregistrée dans le terminal, de manière à interdire le démarrage du système d'exploitation qui est du terminal et qui se trouve à l'état de veille, la liste d'identificateurs de destinataire étant utilisée pour enregistrer un identificateur de destinataire correspondant au message reçu par le terminal depuis l'extérieur, et l'identificateur de destinataire correspondant au logiciel d'application ou au système d'exploitation installé dans le terminal ; ou supprimer l'identificateur de destinataire compris dans le message diffusé d'une liste d'identificateurs de destinataire enregistrée dans le terminal, de manière à interdire le démarrage du système d'exploitation qui est du terminal et qui se trouve à l'état de veille.

10. Appareil selon l'une quelconque des revendications 6 à 9, une unité de traitement étant en outre configurée pour :
si le terminal se trouve dans un état démarré, lorsque le message est un message diffusé désiré et l'identificateur d'utilisateur compris dans le message correspond à un logiciel d'application quelconque installé localement, démarrer le logiciel d'application quelconque ; ou lorsque le message est un message diffusé non désiré et l'identificateur d'utilisateur compris dans le message correspond à un logiciel d'application quelconque installé localement, interdire le démarrage du logiciel d'application quelconque.

11. Terminal comprenant un appareil selon l'une quelconque des revendications 6 à 10.
